# EUROPEAN PATENT APPLICATION

(11) **EP 1 731 259 A1**
(43) Date of publication of application: **13.12.2006**
(21) Application number: 06010195.3
(22) Date of filing: 17.05.2006
(51) Int. Cl.: B23K 37/04

(54) **Workpiece positioner for arc welding and arc welding robot system having the positioner**

(30) Priority: 09.06.2005 JP 2005169429
(71) Applicant: FANUC LTD, Minamitsuru-gun, Yamanashi 401-0597 (JP)
(72) Inventor: Inoue, Toshihiko, Fujiyoshida-shi Yamanashi 403-0017 (JP); Nakayama, Kazutaka, Minamitsu-gun Yamanashi 403-0023 (JP); Iwayama, Takatoshi R.12-203, Fanuc Manshonharimomi, Minamitsuru-gun Yamanashi 401-0511 (JP)
(74) Representative: Thum, Bernhard

(57) **Abstract**

A positioner (30) for arc welding having a few movable members and a simple structure, an arc welding robot system including the positioner and an arc welding robot (10), whereby the orientation of the workpiece corresponding to a welding site of the workpiece may be suitably changed by a minimum motion of the positioner. The positioner includes a pair of support members (32), a first member (36) having two ends supported by the pair of support members such that the first member is rotatable about a first axis (34) parallel to an installation surface of the positioner, a second member (42) having two ends supported by a pair of supporting portions (40) arranged on the first member such that the second member is rotatable about a second axis (38) perpendicular to the first axis, and a workpiece fixing part (44) for fixing the workpiece (100) to the second member.

## Description

### BACKGROUND ART

### 1. TECHNICAL FIELD

The preset invention relates to a positioner for arc welding, an industrial arc welding robot system including the positioner and an arc welding robot.

### 2. DESCRIPTION OF THE RELATED ART

In general, in a system using a robot for arc welding an object to be welded, or a workpiece, a positioner for changing the orientation of the workpiece is combined with the arc welding robot. In this case, the robot may optimize the orientation of a welding torch corresponding to the position and the orientation of the workpiece. For example, Japanese Unexamined Patent Publication No. 6-301411 discloses a calibration method and a device therefor, including a welding torch moving device and a workpiece handling device with a positioner, in which a robot is controlled such that the position of the torch coincides with the origin of a work-base coordinate system. The positioner has four links and joints between them and is configured to change the orientation of the workpiece by controlling the motions of the links and the joints. Also, Japanese Patent Publication No. 3511485 discloses a robot system including upper and lower multi-article robots for gripping a welding torch and a workpiece, respectively. The lower robot is configured such that the center point of the workpiece always coincides with an intersecting point of three axes of first and second arms and a work gripping member, whereby an operating area of the robot may be minimized. Therefore, an occupied area and a cycle time of the whole robot system may be reduced.

The above mentioned positioner may suitably change the orientation of the workpiece. However, the positioner has a complicated constitution including many movable members such as a plurality of arms, links and joints. Therefore, controlling and teaching operation of the positioner is also complicated. Further, when the positioner has a large number of movable members, cooperative control between the positioner and the robot may be easily delayed and/or an inconvenient vibration may easily occur due to the acceleration and the deceleration of each movable member. In particular, due to the vibration, the welding motion of the robot may be unstable and the shape of a welding pool may be undesirably affected.

### SUMMARY OF THE INVENTION

Therefore, an object of the present invention is to provide a positioner for arc welding having few movable members and a simple structure, an arc welding robot system including the positioner and an arc welding robot, whereby the orientation of the workpiece corresponding to a welding site of the workpiece may be suitably changed by a minimum motion of the positioner.

In order to resolve the above problems, according to one aspect of the invention, there is provided a positioner for arc welding, for changing the orientation of a workpiece to be welded, the positioner comprising: a pair of support members; a first member having two ends supported by the pair of support member such that the first member is rotatable about a first axis parallel to an installation surface of the positioner; a second member having two ends supported by a pair of supporting portion arranged on the first member such that the second member is rotatable about a second axis perpendicular to the first axis; a workpiece fixing part for fixing the workpiece to the second member; a first driving part for rotating the first member about the first axis; a second driving part for rotating the second member about the second axis; and a control part for controlling the first and second driving parts.

The pair of supporting members may be directly arranged on the installation surface. Otherwise, the positioner may include a positioner base directly arranged on the installation surface having a base plate configured to rotate about an axis generally perpendicular to the installation surface, and the pair of supporting members may be arranged on the base plate.

It is preferable that the first and second axes are orthogonal to each other, and that the workpiece is fixed to the second member such that the center of gravity generally coincides with the intersecting point of the first and second axes.

In this case, the center of gravity of the first member is preferably offset from the first axis such that the first member may be contained within the second member.

According to another aspect of the invention, there is provided an arc welding robot system including the above positioner for arc welding and an arc welding robot for welding a workpiece fixed to the positioner.

The arc welding robot system may include a forearm; a first wrist element arranged on the end of the forearm and rotatable about a third axis extending in the longitudinal direction of the forearm; a second wrist element arranged on the first wrist element and rotatable about a fourth axis generally perpendicular to the third axis; and a welding torch arranged on the second wrist element and rotatable about a fifth axis generally perpendicular to the fourth axis and apart from the third axis.

It is preferable that the control part is a part of a robot control device, for controlling the arc welding robot, such that the first and second driving parts may be controlled as additional axes of the arc welding robot.

### BRIEF DESCRIPTION OF THE DRAWINGS

The above and other objects, features and advantages of the present invention will be made more apparent from the following description of the preferred embodiments thereof, with reference to the accompanying drawings, wherein:
Fig. 1 is a view of a general configuration of a robot system including an arc welding positioner according to one embodiment of the invention;
Fig. 2 is a view showing examples of a workpiece and a fixing part therefor;
Fig. 3 is a view showing the orientations of a welding torch and the workpiece during arc welding operation;
Figs. 4 to 7 are views each showing the orientation of the positioner when each portion of the workpiece shown in Fig. 2 is welded;
Fig. 8 is a view similar to Fig. 1, showing the situation in which a first member of the positioner is inverted; and
Fig. 9 is a view of a general configuration of a robot system including an arc welding positioner according to another embodiment of the invention.

### DETAILED DESCRIPTION

Embodiments of the invention will be described with reference to the drawings.

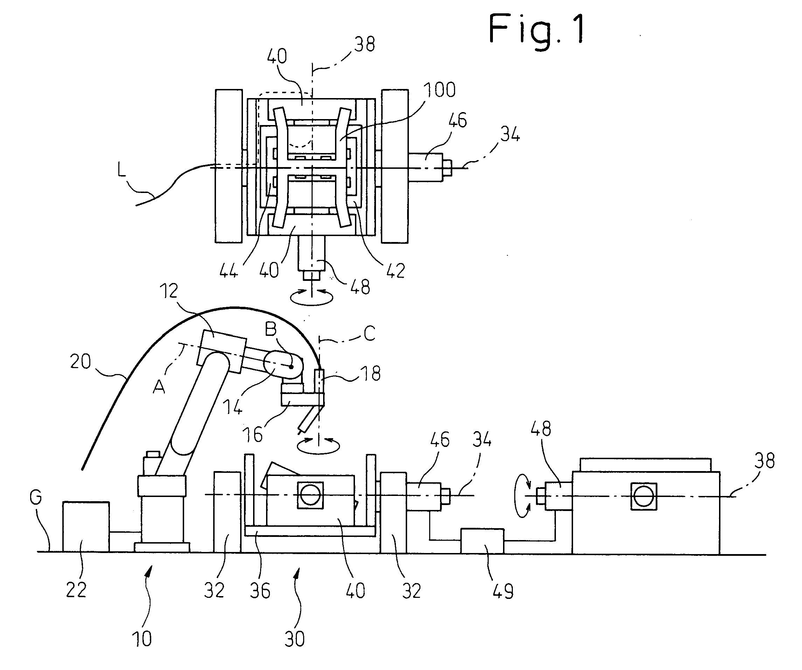

Fig. 1 includes front, top and right-side views of a preferred embodiment of an arc welding robot system according to the invention. The arc welding robot system have an arc welding robot 10 for welding a workpiece 100 (illustrated only in the top view) to be welded and a positioner 30 for holding the workpiece. The robot 10 and the positioner 30 are cooperatively controlled by a control device 22 during arc welding. The arc welding robot 10 may be a known type of six-axes jointed robot, for example, and is preferably a six-axes jointed robot as described in Japanese Unexamined Patent Publication No. 2004-223576. In other words, the arc welding robot 10 includes a forearm 12, a first wrist element 14 arranged on the end of the forearm 12 and rotatable about a third axis A extending in the longitudinal direction of the forearm 12, a second wrist element 16 arranged on the first wrist element 14 and rotatable about a fourth axis B generally perpendicular to the third axis A, and a welding torch 18 arranged on the second wrist element 16 and rotatable about a fifth axis C generally perpendicular to the fourth axis B and apart from the third axis A. Due to such a constitution, in order to weld an outer circumference of the workpiece 100, for example, the position and the orientation of the torch 18 may be freely changed while avoiding interference between the torch 18 or a torch cable 20 connected to the torch 18 and the forearm 12, the workpiece or external equipment. Also, the torch 18 may be rotated by 360 degrees in relation to the forearm 12.

The positioner 30 includes a pair of support members 32 directly arranged on an installation surface G of the positioner, a first member 36 having two ends supported by the pair of support members 32 such that the first member 36 is rotatable about a first axis 34 parallel to the installation surface G, a second member 42 having two ends supported by a pair of supporting portions 40 arranged on the first member 36 such that the second member 42 is rotatable about a second axis 38 perpendicular to the first axis 34, and a workpiece fixing part 44 (illustrated only in the top view and hereinafter described in detail) for fixing the workpiece 100 to the second member 42. The first member 36 may be rotated about the first axis 34 by a first driving part 46 having a motor and a reducer. Similarly, the second member 42 may be rotated about the second axis 38 by a second driving part 48 having a motor and a reducer. The first and second driving part may be controlled by a suitable control part 49. Alternatively, the driving parts may be controlled by using a part of the control device 22 for the robot 10. In this case, the positioner 30 may be controlled as an additional axis of the robot 10, whereby a whole robot system including the robot and the positioner may be simply controlled.

As described above, the first axis 34 and the second axis 38 are perpendicular to each other and, preferably, orthogonal to each other. As shown in Fig. 1, it is preferable that the first member 36 has a C-shape or a box-shape such that the center of gravity of the first member 36 is offset from the first axis 34 so as to contain the second member 42 therein. Further, it is preferable that the workpiece 100 to be welded is fixed to the second member 42 such that the center of gravity of the workpiece is positioned on or near an intersecting point of the first and second axes 34 and 38. Due to such a constitution, the orientation of the workpiece 100 may be suitably changed by a simple motion, i.e., the rotation about the first axis 34 and/or the second axis 38.

The first and second members 36 and 42 of the positioner of the invention are respectively supported at the both ends thereof. Therefore, even when the size of the workpiece is relatively large, the workpiece may be held without causing substantial deflections of the first and second members and the workpiece. Accordingly, the acceleration of the positioner may be raised to the same level as that of the robot, whereby the cooperative control without delay may be possible.

As shown in the top view of Fig. 1, it may be necessary to connect a minus side welding power cable (or an earth cable) L to the workpiece 100. In the invention, in order to connect the earth cable L to the workpiece, the earth cable may extend through hollow portions formed at one ends of the first and second axes 34 and 38 opposing another ends where the motors 46 and 48 are fixed.

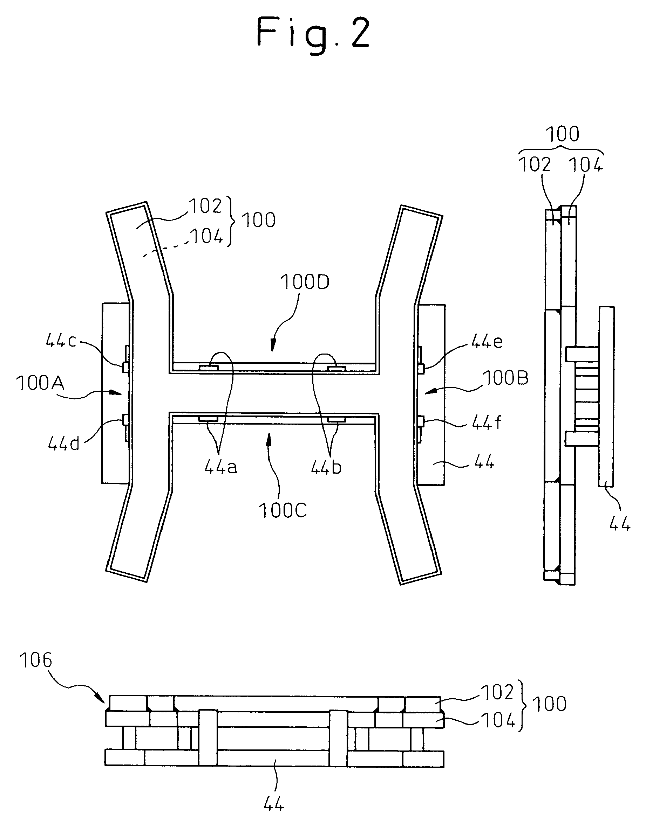

Fig. 2 shows an example of the workpiece 100. In general, welding of an outer circumference of a workpiece is often performed in an automotive pressed part. In the example of Fig. 2, cup-shaped pressed upper and lower plates 102 and 104 are positioned so as to cover an opening of one plate with another plate. Then, a joint line of the plates is welded to form a hollow component. As one workpiece after welding is sequentially replaced with next new workpiece, a fixture is necessary to fix the workpiece on a predetermined reference position on the second member 42. Fig. 2 also shows a workpiece fixing means or a welding fixture 44 for fixing the workpiece 100 to the second member 42. The fixture 44 includes some supporting portions or gripping portions 44a - 44f for suitably holding the workpiece 100.

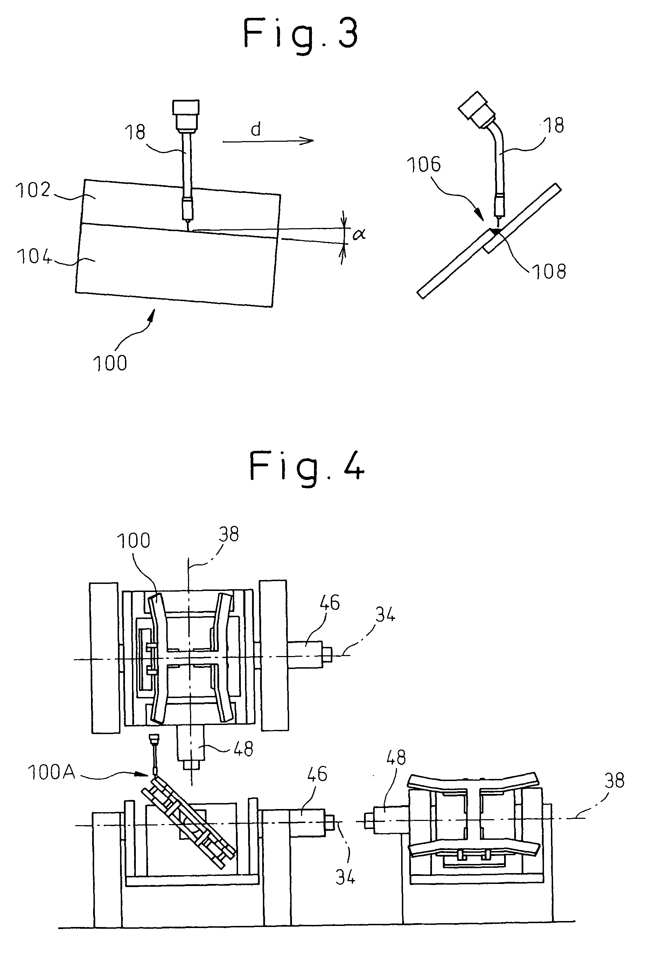

Initially, the workpiece 100 is held by the positioner 30 such that the direction along the thickness of the workpiece is vertical or perpendicular to the installation surface G. Then, during welding, the positioner 30 is controlled such that the orientation of a welding joint 106 of the workpiece 100 is optimized. Concretely, as shown in Fig. 3, the positioner 30 holds the workpiece100 such that a welding pool 108 may be easily formed (or does not drop due to gravity) on the workpiece during welding and the welding joint 106 is inclined by an angle α relative to the installation surface so as to allow the positioner to have a declivity in the welding direction d. Generally, it is preferable that the inclination angle α is approximately 10 degree, which may be changed depending on the shape of the workpiece and/or the welding condition.

On the other hand, as shown in Figs. 1 and 3, the welding robot 10, for changing the position and the orientation of the welding torch 18, may hold and move the torch 18 such that the torch 18 is directed downward and traces the outer circumference of the workpiece to be welded.

Figs. 4 to 7 show the orientations of the positioner 30 when welding sites 100A, 100B, 100C and 100D of the workpiece indicated in Fig. 2 are welded, respectively. Hereinafter, the rotating angles of the first and second axes 34 and 38, in the clockwise direction as viewed from the sides of the first and second driving parts 46 and 48, are indicated as positive degrees.

First, when the site 100A of the workpiece 100 is to be welded, as shown in Fig. 4, the second driving part 48 rotates the second member 42 and the workpiece 100 by +45 degrees about the second axis 38 such that an apex of the generally V-shaped cross section of the site 100A is directed downward or to the installation surface G. Further, the first driving part 46 rotates the first member 36 by -10 degrees about the first axis 34, whereby the welding joint line of the workpiece has a somewhat declivity in the welding direction.

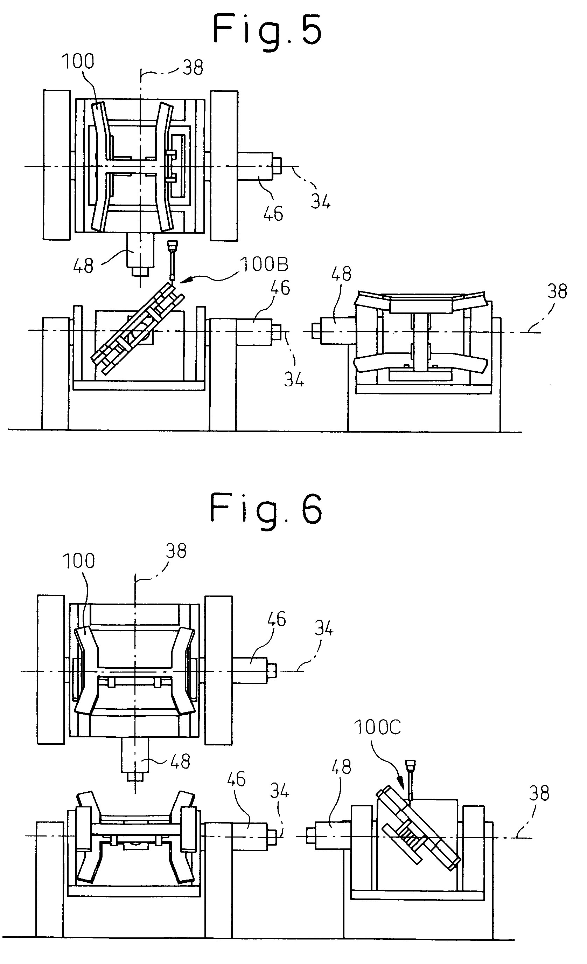

When the site 100B on the opposite side relative to the site 100A is to be welded, the reverse motion to that shown in Fig. 4 should be used. In other words, as shown in Fig. 5, the second driving part 48 rotates the second member 42 by -45 degrees about the second axis 38 and, then, the first driving part 46 rotates the first member 36 by +10 degrees about the first axis 34.

Next, when the site 100C of the workpiece 100 is to be welded, as shown in Fig. 6, the first driving part 46 rotates the first member 36 by +45 degrees about the first axis 34 such that an apex of the generally V-shaped cross section of the site 100C is directed downward or to the installation surface G. Further, the second driving part 48 rotates the second member 42 by +10 degrees about the second axis 38, whereby the welding joint line of the workpiece has a declivity in the welding direction.

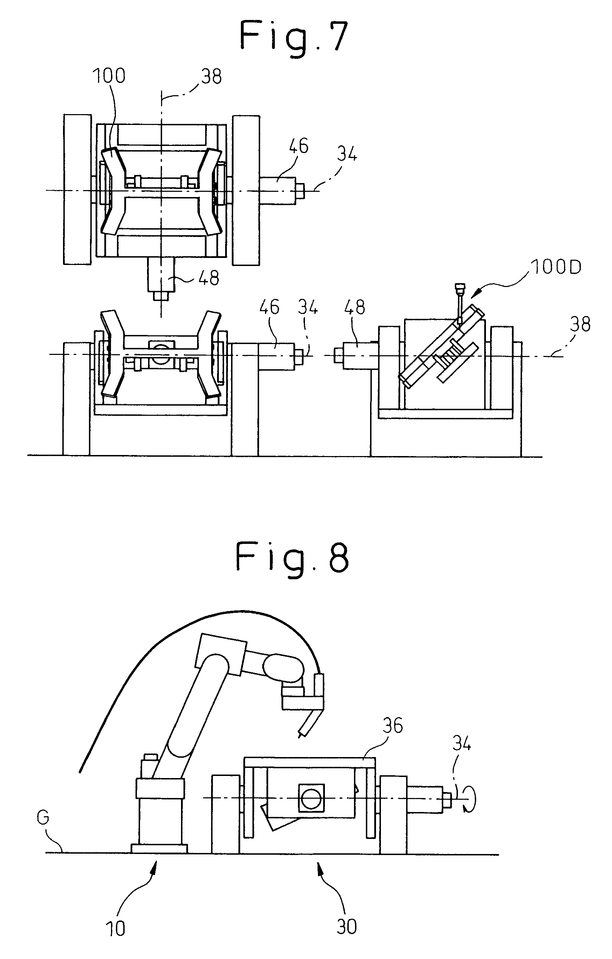

When the site 100D on the opposite side relative to the site 100C is to be welded, a reverse motion, to that shown in Fig. 6, should be used. In other words, as shown in Fig. 7, the first driving part 46 rotates the first member 36 by +45 degrees about the first axis 34 and, then, the second driving part 48 rotates the second member 42 by -10 degrees about the second axis 38.

The workpiece 100 may include many welding sites, having various shapes, other than the above sites 100A to 100D. In any case, the orientation of the joint line may be optimized by a simple operation or by two rotating motions about two axes in which the rotating angles about the first and second axes are suitably controlled.

Fig. 8 shows a further preferable example for changing the orientation of the workpiece in which the positioner 30 is inverted. Depending on the kind of the workpiece, components such as brackets should be welded to both of the upper and lower plates 102 and 104 of the workpiece 100 as shown in Fig. 2. In this case, it is relatively easy to weld the component to the upper plate 102, however, it is necessary to invert the workpiece 100 to weld the component to the lower plate 104. In the present invention, the first member 36 may be rotated about the first axis 34 by 180 degrees by suitably determining the positions the first member 36 and the first axis 34 relative to the installation surface G. Therefore, the component may be welded to the lower plate 104 by a simple operation or rotating motion about one axis.

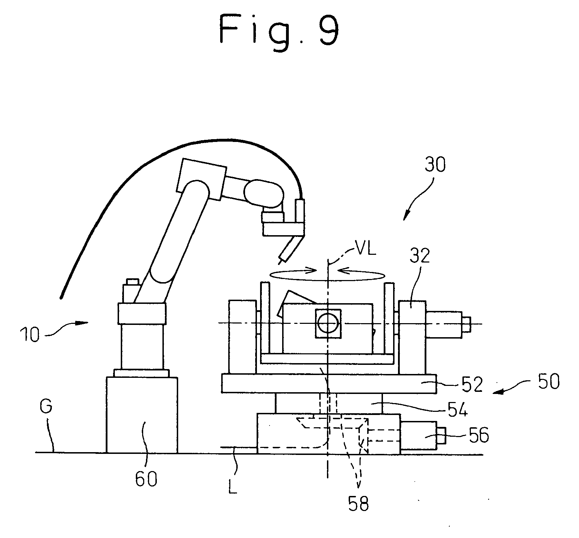

When the size of the workpiece to be welded is considerably large, a working area of the robot 10 may be insufficient for covering all sites of the workpiece to be welded. In such a case, as shown in Fig. 9, it is advantageous to arrange a positioner base 50, directly on the installation surface G, capable of rotatably bearing the pair of support members 32 about a generally vertical axis VL, instead of fixing the support members 32 to the installation surface G. The positioner base 50 includes a base plate 52 on which the pair of support members 32 are arranged, a reducer or reduction gears 54 for rotating the base plate 52 about the axis VL, and a drive source or a servomotor 56 for transmitting power to the reducer 54. As shown, the reducer 54 is preferably coupled to the servomotor 56 via a pair of bevel gears 58. Due to this configuration, the servomotor 56 may be horizontally arranged so as to prevent interference with the positioner 30, and to reduce the total height of the positioner base 50. In this case, the robot 10 may be arranged on a pedestal 60 as shown so as to adjust the height of the robot 10. Preferably, the reducer 54 has a hollow portion through which the earth cable L or a control cable for the servomotor may extend, whereby a disorganized situation, in which some cables are roughly located around the robot or the positioner, may be avoided.

The positioner according to the invention may change the orientation of the joint line of the workpiece such that the workpiece is rotated about its center of gravity. Therefore, the minimum motion is necessary for optimizing the orientation of the workpiece. On the other hand, the welding robot is only required to hold the welding torch such that the torch directs downward and traces the outer circumference of the workpiece. In this case, by using a six-axes jointed robot as described in Japanese Unexamined Patent Publication No. 2004-223576, a continuous welding may be possible while preventing interference between the welding torch and the workpiece, whereby a remarkably efficient welding robot system may be constituted. In general, in a system in which a robot and a positioner are combined, a workpiece to be welded may be variously orientated because the system has a large number of degrees of freedom. However, the teaching operation of such a system is often complicated. By using the positioner of the invention, the motion of each of the positioner and the robot may be easily shared, whereby the teaching operation may become easier.

According to the positioner of the invention, the orientation of the workpiece corresponding to the welding site may be suitably changed by a simple motion, i.e., the rotation of the two members about the two axes perpendicular to each other. On the other hand, the welding robot is only required to hold the welding torch such that the torch directs downward and traces the outer circumference of the workpiece.

While the invention has been described with reference to specific embodiments chosen for the purpose of illustration, it should be apparent that numerous modifications could be made thereto, by one skilled in the art, without departing from the basic concept and scope of the invention.

## Claims

1. A positioner (30) for arc welding, for changing the orientation of a workpiece (100) to be welded, **characterized in that** the positioner comprises:
a pair of support members (32);
a first member (36) having two ends supported by the pair of support members (32) such that the first member (36) is rotatable about a first axis (34) parallel to an installation surface (G) of the positioner;
a second member (42) having two ends supported by a pair of supporting portions (40) arranged on the first member (36) such that the second member (42) is rotatable about a second axis (38) perpendicular to the first axis (34);
a workpiece fixing part (44) for fixing the workpiece (100) to the second member (42);
a first driving part (46) for rotating the first member (36) about the first axis (34);
a second driving part (48) for rotating the second member (42) about the second axis (38); and
a control part (22) for controlling the first and second driving parts (46, 48).

2. The positioner as set forth in claim 1, wherein the pair of supporting members (32) are directly arranged on the installation surface (G).

3. The positioner as set forth in claim 1, further comprising a positioner base (50) directly arranged on the installation surface (G) having a base plate (52) configured to rotate about an axis (VL) generally perpendicular to the installation surface (G), the pair of supporting member (32) being arranged on the base plate (52).

4. The positioner as set forth in claim 1, wherein the first and second axes (34, 38) are orthogonal to each other, and wherein the workpiece (100) is fixed to the second member (42) such that the center of gravity generally coincides with the intersecting point of the first and second axes (34, 38).

5. The positioner as set forth in claim 4, wherein the center of gravity of the first member (36) is offset from the first axis (34) such that the second member (42) may be contained within the first member (36).

6. An arc welding robot system, comprising the positioner (30) for arc welding as set forth in one of claims 1 to 5 and an arc welding robot (10) for welding a workpiece (100) fixed to the positioner (30).

7. The arc welding robot system as set forth in claim 6, wherein the robot system comprising:
a forearm (12);
a first wrist element (14) arranged on the end of the forearm (12) and rotatable about a third axis (A) extending in the longitudinal direction of the forearm (12);
a second wrist element (16) arranged on the first wrist element (14) and rotatable about a fourth axis (B) generally perpendicular to the third axis (A); and
a welding torch (18) arranged on the second wrist element (16) and rotatable about a fifth axis (C) generally perpendicular to the fourth axis (B) and apart from the third axis (A).

8. The arc welding robot system as set forth in claim 6, wherein the control part (22) is a part of a robot control device (22) for controlling the arc welding robot (10), such that the first and second driving parts (46, 48) may be controlled as additional axes of the arc welding robot (10).
